(19) Europäisches Patentamt
European Patent Office
Office européen des brevets

(11) EP 4 069 789 B1

# (12) EUROPEAN PATENT SPECIFICATION

(45) Date of publication and mention of the grant of the patent:
**22.05.2024 Bulletin 2024/21**

(21) Application number: **20816206.5**

(22) Date of filing: **03.12.2020**

(51) International Patent Classification (IPC):
***C09D 163/00*** *(2006.01)* ***C08K 3/32*** *(2006.01)*

(52) Cooperative Patent Classification (CPC):
(C-Sets available)
**C09D 163/00** (Cont.)

(86) International application number:
**PCT/EP2020/084451**

(87) International publication number:
**WO 2021/110829 (10.06.2021 Gazette 2021/23)**

## (54) LOW SOLVENT COATING COMPOSITION

LÖSUNGSMITTELARME BESCHICHTUNGSZUSAMMENSETZUNG

COMPOSITION DE REVÊTEMENT À FAIBLE TENEUR EN SOLVANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.12.2019 EP 19213944**
**17.12.2019 EP 19217045**

(43) Date of publication of application:
**12.10.2022 Bulletin 2022/41**

(73) Proprietor: **Akzo Nobel Coatings International B.V.**
**1077 WW Amsterdam (NL)**

(72) Inventors:
- **KIM, MiHyang**
**Gyeongsangnam-do 656-813 (KR)**
- **MIN, SeongWoon**
**Gyeongsangnam-do 656-813 (KR)**

(74) Representative: **Akzo Nobel IP Department**
**Christian Neefestraat 2**
**1077 WW Amsterdam (NL)**

(56) References cited:
**WO-A1-2018/046702 WO-A1-2018/175730**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 069 789 B1

(52) Cooperative Patent Classification (CPC): (Cont.)

C-Sets
**C09D 163/00, C08K 2003/325;**
**C09D 163/00, C08K 2003/326;**
**C09D 163/00, C08K 2003/327**

## Description

### Technical Field

This invention relates to a low solvent or solvent-free epoxy coating composition that can be applied by conventional airless spray equipment to provide a fast curing anti-corrosive layer on a substrate. The invention also relates to a method for coating a substrate using such a coating composition.

### Background Art

Primers are often used to coat structures, including those that are used or located in marine environments. The primer helps impart good weathering and corrosion resistance, while maintaining good adhesion to the substrate surface and to subsequently applied coatings and finishes. An example of an anticorrosive primer coating composition is described in US2012/0025142.

A problem with a number of primer compositions is that they comprise significant quantities of organic solvents. With increasingly stringent regulations on emissions of volatile organic compounds (VOCs), there is a need to develop coatings that have low or even zero VOC content.

However, increasing the solids content of a coating increases the viscosity, making its application more difficult. This can be a problem because spraying techniques are typically used to coat large structures such as ships or oil rigs, which requires the coating composition to have sufficient mobility.

Low VOC, high solids content, epoxy primer coating compositions have been described in WO2018/046702, WO2018/175730, US8871888 and CN106800861A.

However, there remains a need for further high solids, low VOC compositions that can act as an effective coating for structures that are exposed to onshore and offshore corrosive environments, for example marine and fresh-water environments.

### Summary of Invention

The present invention relates to a coating composition comprising

- 10.0 to 40.0 wt% of a curable epoxy resin,
- 10.0 to 35.0 wt% of a curing agent, and
- 0.05 to 10.0 wt% of one or more alkaline earth aluminium polyphosphates;

The solids content of the composition is at least 90 wt% and/or the solids volume is at least 90.0 %, when determined according to ASTM D5201-05a.

The invention also relates to a method of coating a substrate using such a composition.

### Description of Embodiments

The coating composition is of particular benefit in corrosion protection and can function as an anticorrosive coating composition. Anticorrosive coating compositions are often alternatively referred to as anticorrosion coatings, corrosion resistant coatings, or corrosion protection coatings.

A particular advantage of the coating compositions is the ability to maintain high adhesion to the substrate even after being immersed for extended periods of time. A problem associated with many coatings is that, after immersion, the substrate surface can still suffer some corrosion, for example where there has been some water penetration between the coating and the substrate, which can result in lifting of the coating through loss of adhesion. The compositions described here are able to resist this loss of adhesion, and also inhibit transgression of water across the coating film, which helps improve corrosion resistance of underlying metallic substrates.

In embodiments, the substrate is a metal substrate, for example steel. In embodiments, the substrate is part of a structure which is exposed to the elements, such as wind, rain, ice or snow. In further embodiments, the structure can be exposed to sea-water, fresh-water or brackish water environments, for example in an off-shore platform, a wind turbine, a ship or other water-borne vehicle. The coating composition is particularly suited to substrates that are submerged for extended periods of time, i.e. ship hulls, ship ballast tanks or sub-surface metallic portions of fixed or floating platforms or shoreside structures. The substrate surface to which the coating is applied does not necessarily have to be on the external surface of the structure. For example, the substrate can be the inside surface of a ballast tank or storage tank, such as a potable water tank.

The coating composition forms an epoxy layer on the substrate. The layer can optionally be overcoated, for

example to give improved UV radiation or antifouling protection, or to improve colour stability.

The coating composition can be coated on a pre-treated substrate, for example on top of a previously applied coating layer. In embodiments, the coating composition is a primer composition, on which other coating layers are optionally added. In further embodiments, the coating composition is a universal primer composition.

In embodiments, the composition is suitable for being applied onto a surface, e.g. using brush or roller, or using suitable spray equipment. In embodiments, it is suitable for being sprayed by airless spray equipment. The composition can be applied as a single coat, although if desired multiple coats can be applied.

The coating composition comprises, inter alia, a binder and a curing agent. These are typically kept separate before use, to avoid premature curing of the binder, i.e. they can be supplied as a so-called 2-K (2 component) composition. Therefore, in embodiments, the coating composition comprises two separate parts, i.e. a first part (A) comprising the binder, and a second part (B) comprising the curing agent. When used, the two parts (A) and (B) are mixed together to form the coating composition and applied to a substrate. The composition then cures to form a layer on the substrate.

In such embodiments, the mixing ratio of the first and second parts of the composition is at least in part determined by the respective amounts of epoxy and active hydrogens present in the total composition. In embodiments, the mixing ratio in solids volume (defined below) of part (A) to part (B) is in the range of from 1:1 to 10:1, such as from 5:1 to 2:1.

[Solids Content]

The coating composition of the invention has a high solids content of at least 90 wt%, and also has a low content of volatile organic compounds (VOC). In embodiments, the solids content is at least 95 wt%, for example at least 99 wt%. In further embodiments, the solids content is 100 wt%, i.e. the VOC content is zero (i.e. 0 wt% or 0 g/L).

The coating composition of the invention also has a high solids volume% ("VS%"), which in embodiments is at least 90%, for example at least 95%, or at least 99%, for example 100%.

Unless otherwise stated, all amounts stated as solids weight% or solids volume% are intended to refer to the total coating composition, e.g. Part (A) plus Part (B) for a 2K composition, before being applied to a substrate.

The solids content (in weight or volume terms) and the VOC content are calculated using method ASTM D5201-05a.

According to ASTM D5201-05a, the term "solids" does not actually represent purely solid components. It instead refers to the non-volatile components of the composition that are assumed to remain in and form part of the coating layer once cured. Thus, it is assumed that volatile components evaporate, and the materials that remain are identified as coatings solids. Solvents can be used to adjust the viscosity for application and appearance of the coating, and are not considered coatings solids since they evaporate. However, other liquid materials, such as plasticisers, reactive diluents, etc. that are not volatile and are expected to be retained in the dried film are generally classified as part of the coating solids.

Where the composition is a 2-component system, the first binder-containing part (A) can have a solids volume of at least 80%, for example at least 90%. The second curing agent-containing part (B) can have a solids volume of at least 80%, for example at least 90%.

The composition contains a very low solvent and VOC content. In embodiments, the solvent content is less than 5 wt%, for example less than 2 wt%, or than 1 wt% solvent. In further embodiments, the solvent content is 0.5 wt% or less, and in still further embodiments there is no solvent present.

In 2-component systems, i.e. comprising a binder-containing part (A) and curing agent-containing part (B), the solvent content (and the VOC content) in each part can be (independently) less than 10 wt%, for example less than 5 wt%, less than 2 wt% or less than 1 wt%, such as 0.5 wt% or less. In further embodiments, both parts (A) and (B) contain no solvent.

The solvent content (and the VOC content) of the coating composition (as measured by D5201-05a) is typically less than 250 g/L, for example less than 100 g/L, or less than 50 g/L. In some embodiments the solvent content is 25 g/L or less, such as 10 g/L or less.

The term "volatile organic compound" or its abbreviation "VOC", when used herein, means an organic compound having an initial boiling point less than or equal to 250 °C measured at a standard atmospheric pressure of 101.3 kPa.

By "no solvent" or "no VOC", is meant no added solvent or VOC. However, there may be small amounts present in the component materials of the coating composition (e.g. water may be present in small quantities). Typically, where a coating composition is said to comprise "no solvent" or "no VOC", the total amount of solvent or VOC is less than 1000 ppm, for example less than 500 ppm in the coating composition.

When solvent is present, it can be selected from hydrocarbons and oxygen-containing solvents, for example being selected from alkyl aromatic hydrocarbons (such as xylene and toluene), alcohols, ethers, ketones and esters (such as methyl ethyl ketone, methyl isobutyl ketone, methoxypropanol, butyl acetate, benzyl alcohol, octyl phenol, resorcinol, n-butanol, isobutanol and isopropanol). In embodiments, the solvent comprises from 2 to 20 carbon atoms,

for example from 3 to 15 carbon atoms.

Water can present, although is typically used in low quantities. If present, it is typically at concentrations of 1 wt% or less of the total coating composition, for example 0.5 wt% or less.

[Drying and Curing Characteristics]

The coating composition is typically self-curing, i.e. is able to self-cure once the curing agent and epoxy resin components are mixed, without the need for any additional initiation process, e.g. heat. Curing can take place at ambient temperature, for example in the range of from -10 to 50 °C or from 0 to 40 °C. Heat can optionally be applied should the rate of curing need to be accelerated for any reason.

The coating can be applied as a coating layer. In addition, since the VOC and solvent content is low, it also is possible to apply a further coating whilst the first layer is "wet". This enables rapid build-up of layers to create a thicker coating in a shorter period of time. It is also possible to wait until the first layer is cured before applying subsequent layers.

[Epoxy Resin]

The coating composition comprises a binder. The binder can comprise one or more curable epoxy resins. In embodiments, the binder comprises at least one liquid epoxy resin. In this context, "liquid" refers to the state of the epoxy resin at 23°C and 1 atm (1.013 bar).

Suitable curable epoxy resins include aromatic epoxy resins, typically having two or more aromatic (or heteroaromatic) groups, for example a diphenylalkyl moiety. In embodiments the epoxy resin comprises two or more epoxy groups or epoxy ether groups such as glycidyl or glycidyl ether groups. Examples of epoxy resin include bisphenol glycidyl ether and diglycidyl ether resins and resorcinol glycidyl ether and diglycidyl ether resins.

Suitable epoxy resins are those whose formula can be represented by Formula (1):

$$Ar^1(X^1)\text{-}M^1\text{-}Ar^2(X^2) \qquad (1)$$

$X^1$ and $X^2$ are each independently selected from $C_{1-12}$ alkyl or alkoxy groups containing an epoxy ring, for example $C_3$-$C_6$ epoxy ring-containing alkoxy groups such as glycidoxy groups. Either or both of $X^1$ or $X^2$ group can optionally be substituted with one or more substituents selected from halide and hydroxy. Where a halide is present, it is typically selected from F and Cl. In embodiments, no halogen atoms are present, and in further embodiments, there are no substituents. The carbon chain in the $C_{1-12}$ alkyl or alkoxy group can be linear or branched. In embodiments, $X^1$ and $X^2$ are the same.

$Ar^1$ and $Ar^2$ are each independently selected from aromatic and heteroaromatic groups, e.g. groups with a 5 or 6 membered aromatic ring. Heteroatoms in the heteroaromatic group can be selected from one or more O, S and N atoms, for example from 1 to 3 heteroatoms. In embodiments, the aromatic group does not contain a heteroatom. The aromatic or heteroaromatic group can optionally be substituted with one or more substituents selected from $C_{1-6}$ alkyl, $C_{1-6}$ alkoxy, $C_{1-6}$ haloalkyl, $C_{1-6}$ haloalkoxy, halide and hydroxy. Where halogen is present (i.e. as halide, or on a haloalkyl or haloalkoxy group), it is typically selected from F and Cl. In embodiments, no halogen is present. In embodiments, the optional substituent is selected from $C_{1-2}$ alkyl. In embodiments $Ar^1$ and $Ar^2$ are the same.

$M^1$ is a linking group selected from $-[C(R^1)_2]_a-$ and $-SO_2-$, where a is from 1 to 3, and each $R^1$ is, independently and on each occurrence, selected from H and $C_{1-2}$ alkyl. In embodiments, M is selected from $-CH_2-$ and $-C(Me)_2-$.

In embodiments, the epoxy resin can also be represented by Formula (2) or (3):

$$Ar^1(X^1)\text{-}M^1\text{-}Ar^2\text{-}[M^2\text{-}Ar^1(X^1)\text{-}M^1\text{-}Ar^2]_b\text{-}X^2 \qquad (2)$$

$$Ar^1(X^1)\text{-}M^3\text{-}[Ar^1(X^1)\text{-}M^3\text{-}]_b\text{-}Ar^1(X^1) \qquad (3)$$

$X^1$, $X^2$, $M^1$, $Ar^1$ and $Ar^2$ are as defined above.

In Formula (2), $M^2$ is hydroxy-substituted $C_{1-12}$ dialkoxy group. In embodiments, $M^2$ comprises the same number of carbon atoms as $X^2$.

In Formula (2), $Ar^1$ and $Ar^2$ can be the same. Additionally, or alternatively, $X^1$ and $X^2$ can be the same.

In Formula (3), $M^3$ is a $C_{1-12}$ aliphatic hydrocarbyl group, e.g. selected from $C_{1-12}$ linear, branched or cyclic alkyl groups. Examples include $C_{1-12}$ alkylene groups e.g. methylene ($-CH_2-$), ethylene ($-C_2H_4-$), isopropyl ($-CH(Me)CH_2-$), propyl ($-CH_2CH_2CH_2-$), and $C_{5-10}$ cycloalkyl groups such as cyclohexyl ($-C_6H_{10}-$) and dicyclopentanyl ($-C_{10}H_{18}-$). Cyclic groups can optionally comprise one or more $C_{1-3}$ alkyl substituents. The aliphatic hydrocarbyl group is typically saturated, although in embodiments it can be unsaturated, for example comprising one or more double bonds.

In embodiments, in Formula (3), all occurrences of $Ar^1$, $M^3$ and $X^1$ are the same.

In each of Formula (2) and Formula (3), b can be a number in the range of from 0 to 10, for example from 0 to 5 or from 0 to 2. Formula (2) is the same as Formula (1) in the case where b = 0. The number does not have be a whole number, representing the average number of units where there is a mixture.
In embodiments, the resin is selected from bisphenol (di)glycidyl ether resins and resorcinol (di)glycidyl ether resins, where the bisphenol is bisphenol A, F or S.
In embodiments, bisphenol (di)glycidyl ether resins, such as bisphenol A or F resins, have epoxy equivalent weights in the range of from 100 to 800 g/eq, for example in the range of from 140 to 550 g/eq.
In embodiments, the resins are so-called Novolac resins, based on a moiety formed from reaction between an aromatic alcohol (e.g. phenol or cresol) and an aldehyde such as formaldehyde, which can then be modified with an epoxy group, e.g. a glycidyl ether group.
Examples include phenol Novolac epoxy resins, such as DEN™ 425, DEN™ 431 and DEN™ 438 (ex DOW Chemicals), Epon™ 154, Epon™ 160, Epon™ 161 and Epon™ 162 (ex. Momentive Performance Chemicals), and Epalloy™ 8250 (ex. Emerald Chemical Co.). Such epoxy compounds can have an epoxy equivalent weight in the range of 100 to 300, for example 150 to 220 or 165 to 185 g/eq.
Other epoxy resins which may be used include epoxy cresol Novolac resins, such as Epon™ 164 and Epon™ 165 (ex. Momentive Performance Chemicals), or bisphenol A epoxy novolac resins, such as the Epon™ SU range of resins.
In other embodiments, the epoxy resin can be selected from dicyclopentadiene aromatic glycidyl ether resins, e.g. dicyclopentadiene-cresol glycidyl ether resins.
In embodiments, the epoxy resin has a (number average, $M_n$) molecular weight in the range of from 100 to 2000, for example from 200 to 1000, from 250 to 800, or from 350 to 800.
The coating composition can comprise more than one epoxy resin, e.g. blends of any of the above epoxy resins may be used in combination with each other. In embodiments, a blend comprising a bisphenol A and a bisphenol F can be used. In further embodiments, a blend of a bisphenol A, a bisphenol F and a Novolac resin can be used.
The epoxy resin can be liquid or solid. In embodiments, it is a liquid or (in the case of more than one epoxy resin being present) at least one of the epoxy resins is liquid.
In embodiments a mixture of liquid bisphenol F epoxy resin with liquid bis-phenol A epoxy resin is used. In other embodiments, a mixture of solid or semi-solid bisphenol A epoxy resin can be mixed with liquid bisphenol A or bisphenol F.
In particular, in order to minimize the solvent content of any coating composition containing the epoxy resin, it is preferred that the epoxy resin has a low solvent content, e.g., below 20 wt%, or below 10 wt%, based on the weight of epoxy resin. In embodiments, the epoxy resin is free of solvent.
The amount of curable epoxy resin in the coating composition is in the range of from 10.0 to 40.0 wt%.

[Organic Silane]

The coating composition of the invention can contain at least one organic silane compound. Organic silanes can improve drying properties at low temperature, and can also improve the coating's flexibility, substrate adhesion and anti-corrosive performance. For 2-component systems, the silane can be included in either part (A) or part (B) of the coating composition, typically in the first binder-containing part (A). In embodiments, the silane compound contains an epoxy group. Silanes of the invention are generally of low molecular weight, for example less than 400 g/mol. Examples of suitable silane compounds are those having general Formula (4):

$$(R^2)_{4-x}SiY_d \qquad (4)$$

$R^2$ is an organic group that can optionally have one or more substituents $ER^3$. Thus, the silane can be alternatively be represented by formula (5).

$$[R^2(ER^3)_e]_{4-d}SiY_d \qquad (5)$$

In the above formulae, d is an integer in the range of from 1 to 3, and e represents the number of substituents on the $R^2$ group. In embodiments, e is a whole number in the range of from 0 to 3.
$R^2$ represents an organic group bound directly to the silicon atom of the silane via a SiC bond.
Each $R^2$ group can be independently selected from linear and branched, saturated and unsaturated aliphatic hydrocarbon groups having from 1 to 12 carbon atoms, for example from 1 to 6 carbon atoms. Typically, each $R^2$ is selected from alkyl and alkenyl groups, and in further embodiments each $R^2$ is an optionally substituted alkyl group.
Each $R^2$ group can also independently be selected from aliphatic or aromatic cyclic groups, e.g. cycloalkyl, cycloalkenyl and aryl groups, typically having from 5 to 12 atoms in the ring system, for example 5 or 6 atoms in the ring system. Such cyclic groups can comprise one or more heteroatoms in the ring, for example one or more O or N atoms.

Where there is more than one $R^2$ group (i.e. if, d is less than 3), each $R^2$ can be the same or different.

Where the group $R^2$ is optionally substituted, it comprises one or more substituents of formula $ER^3$, typically from 1 to 3 $ER^3$ substituents, for example 1 $ER^3$ substituent.

E is an optional linking group, i.e. it can be present or absent. Where E is absent, there is a direct bond between $R^2$ and $R^3$.

Where E is present, it can be selected from -O-, -S-, -OC(O)-, -C(O)-, -C(O)-, -C(O)OC(O)-, $-NR^4-$, NCO (isocyanate), $-N(R^4)C(O)-$, $-N(R^4)C(O)N(R^4)-$ and $-C(O)N(R^4)-$, where $R^4$ is H or $C_{1-6}$ alkyl.

In embodiments, $R^3$ is selected from $C_{1-6}$ alkyl, $C_{1-6}$ alkenyl, aryl, heteroaryl, $C_{1-6}$ alkylaryl and $C_{1-6}$ alkylheteroaryl, in which the aryl or heteroaryl rings have 5 or 6 atoms in the ring. The $R^3$ group can optionally be substituted with one or more groups selected from hydroxyl, halogen (such as F, Cl or Br), epoxy, $-OR^4$ and $-NR^4_2$ where each $R^4$ is as defined above. When E is present, $R^3$ is not halogen, but it can be hydrogen. When E is not present, $R^3$ can be halogen, but not hydrogen.

$R^3$ can also be selected from a polyether group of formula $-\left[\left(CR^5_2\right)_f L\right]_g - R^6$, where f is an integer from 2 to 4, g is an integer from 3 to 20, L is -O- or $-NR^5-$ and each $R^5$ and $R^6$ is independently selected from H and $C_{1-3}$ alkyl. In such embodiments, E can be the same as L, each $R^5$ can be selected from H and methyl, and $R^6$ can be selected from H and $C_{1-3}$ alkyl. Integer g can be in the range of from 3 to 8. Integer f can be in the range of from 2 to 3.

In embodiments, the organic group can be an isocyanurate, based on a trimer of an isocyanate compound.

In embodiments, an $ER^3$ group either is or contains a group selected from hydroxyl, carboxyl, ester, epoxy, (meth)acrylate, amino, amido, isocyanate, isocyanurate and ureido.

In embodiments, $R^3$ is a group comprising from 1 to 8 carbon atoms, (a $C_{1-8}$ alkyl group), and additionally includes an $ER^3$ substituent where E is oxygen and $R^3$ is selected from optionally substituted $C_{1-8}$-epoxyalkyl and $C_{1-8}$ hydroxyalkyl. Examples of silanes include 3-glycidyloxypropyl silanes and 2,3-dihydroxypropoxypropyl silanes.

Each Y is selected from halogen or $C_{1-6}$ alkoxy. In embodiments, Y is not halogen. In embodiments, each Y is methoxy or ethoxy.

Examples of organic silane compounds include methyl trimethoxysilane, methyl triethoxy silane, dimethyl dimethoxy silane, trimethyl ethoxy silane, ethyl trimethoxy silane, propyl triethoxy silane, i-butyl triethoxy silane, octyl trimethoxy silane, octyl triethoxy silane, cyclohexyl trimethoxy silane, cyclohexyl triethoxy silane, phenyl trimethoxy silane, phenyl dimethyl ethoxy silane, 3-(glycidoxypropyl) trimethoxy silane 3-glycidoxypropyl methyl diethoxy silane, (3-glycidoxypropyl)triethoxy silane, (3-glycidoxypropyl) hexyl trimethoxy silane, beta-(3,4-epoxycyclohexyl)-ethyl trimethoxy silane, beta-(3,4-epoxycyclohexyl)-ethyl triethoxy silane, methacryloxymethyl trimethoxy silane, 3-methacryloxypropyl trimethoxy silane, 3-methacryloxypropyl triethoxy silane, 3-methacryloxypropyl triisopropoxysilane, 3-mercaptopropyl trimethoxy silane, 3-mercaptopropyl triethoxy silane, 3- chloropropyl triethoxy silane, trimethylsilyl chloride, ureidomethyl triethoxy silane, ureidoethyl triethoxy silane, ureidopropyl triethoxy silane, isocyanatomethyl trimethoxy silane, isocyanatopropyl trimethoxy silane, tris-[3-(trimethoxysilyl)propyl] isocyanurate, aminopropyl trimethoxy silane, aminopropyl triethoxy silane, N-(2-aminoethyl)-3-aminopropyl trimethoxy silane, N-(2-aminoethyl)-3-aminopropyl triethoxy silane, triamino-functional trimethoxy silane, (3-[2-(2-aminoethylamino)ethylamino]propyl-trimethoxy silane), bis(gamma-trimethoxysilylpropyl)amine, N-ethyl-gamma-aminoisobutyl trimethoxy silane, N-phenyl-gamma-aminopropyl trimethoxy silane, 4-amino-3,3-dimethylbutyl trimethoxy silane, N-(cyclohexylaminomethyl) triethoxy silane, phenylaminomethyl trimethoxysilane, N-(aminoethyl)-aminopropyl trimethoxysilane, 3-aminopropylmethyl diethoxy silane, 3-(2-aminoethylamino)propyl methyl dimethoxysilane, and mixtures thereof.

In embodiments, the epoxy-containing silanes comprise an epoxy group, for example a glycidyl or glycidoxy group. Examples include those described in WO2017/068015 at page 16, line 20 to page 18, line 5.

In embodiments, the silane can be at least partially condensed, for example comprising Si-O-Si bonds. For example, they can be of Formula (6):

$$(R^2)_h SiY_{(3-h)}\text{-}O[\text{-}(R^2)_h SiY_{(2-h)}\text{-}O]_k\text{-}(R^2)_h SiY_{(3-h)} \qquad (6)$$

In this formula, h is 1 or 2, and k can be in the range of from 0 to 30, for example from 0 to 10, or from 0 to 4. k does not have to be a whole number, because it may represent an average where there is a mixture. $R^2$ and Y are as defined above.

Where the silane is capable of reacting with the epoxy binder, e.g. if the silane compound comprises an amine or polyamine organic group, then it can be included in the curing agent-containing part (B) of a 2-component coating composition. In other embodiments, the silane is can be present in the first part (A) of the composition.

Silanes are described in US4927749, and in WO2017/068015 at page 12, line 18 to page 14, line 2. They are also commercially available, for example being sold under the brand names Dynasylan™ D (Evonik), Silquest™ (Momentive) and Geniosil™ (Wacker).

The amount of silane in the final coating composition can be in the range of from 1.0 to 15.0 wt.%, for example 1.0 to 10wt% or 1.5 to 8.0 wt%, such as 1.5 to 6.0 wt% on total weight. In embodiments, the content is 2.0 to 6.0 wt%. Increasing the silane content can decrease the viscosity of the composition.

[Reactive diluent]

The coating composition can comprise a reactive diluent. A reactive diluent is an additive which behaves like a solvent in reducing the viscosity of a composition but does not contribute to its solvent or VOC content, because it possesses reactive groups which allow it either to bind to the coating resins, or to undergo a chemical reaction independent of the main curing reaction. They are typically of lower viscosity than the epoxy resin binder, and do not generally form mechanically robust coatings in the absence of resin.
In embodiments the reactive diluent can be selected from epoxy-containing resins which are aliphatic, or which comprise no more than one aromatic or heteroaromatic group. They can be represented by Formula (7):

$$R^7 (TR^8)_m \qquad (7)$$

m is an integer from 1 to the number of carbon atoms in the $R^7$ group.
$R^7$ is a $C_{1-30}$ aliphatic or $C_{5-10}$ aromatic or heteroaromatic group. Aliphatic groups can be linear, branched or cyclic, or can comprise both cyclic and non-cyclic portions.
$R^7$ can also be selected from $C_{2-30}$ aliphatic ether or polyether moieties, e.g. of formula $R^a[OR^b]_nOR^c$. n is an integer in the range of from 1 to 14. $R^a$, $R^b$ and $R^c$ are all aliphatic groups, which can be the same or different.
Aliphatic groups in $R^7$ are typically saturated, although in embodiments they can comprise one or more unsaturated groups such as C=C double bonds.
Heteroaromatic $R^7$ groups can comprise one or more heteroatoms, typically from 1 to 3 heteroatoms, for example 1 or 2 heteroatoms. They are typically independently selected from O, S and N, for example from O and N.
The $R^7$ group, in addition to the $TR^8$ substituent(s), can optionally be substituted with one or more further substituents selected from halide and hydroxy, for example from 1 to 5 substituents or from 1 to 3 substituents. Substituents of aromatic or heteroaromatic groups can additionally include $C_{1-12}$ alkyl, $C_{2-12}$ alkenyl and $C_{1-12}$ alkoxy groups. If halide is present, it is typically selected from F and Cl, although in embodiments, there are no halide substituents.
$R^8$ is a reactive group selected from $C_{2-8}$ epoxy, $C_{2-8}$ olefin, acrylate and $C_{1-8}$ alkyl acrylate. In embodiments, $R^8$ is selected from $C_{2-8}$ epoxy and $C_{2-8}$ olefin. $R^8$ groups can optionally comprise one or more further substituents, e.g. from 1 to 5 or from 1 to 3 further substituents, selected from halide, hydroxy, $C_{1-4}$ alkoxy and $C_{1-4}$ haloalkoxy. If halide groups or substituents are present in $R^8$, they can be selected from F and Cl. In embodiments, there are no halide groups or substituents in $R^8$.
T is either absent, i.e. $R^7$ and $R^8$ are directly bonded together, or T is a linking group selected from -O-, -OC(O)- and -C(O)O-, e.g. $R^7$-O-$R^8$, $R^7$-C(O)O-$R^8$, or $R^7$-OC(O)-$R^8$. Where $R^8$ is an olefin, a "T" linking group is present.
Specific examples of reactive diluents include phenyl glycidyl ether, $C_{1-30}$ alkyl phenyl glycidyl ethers (e.g. $C_{1-12}$ or $C_{1-5}$ alkyl phenyl glycidyl ethers such as methyl phenyl glycidyl ether, ethyl phenyl glycidyl ether, propyl phenyl glycidyl ether and para t-butyl phenyl glycidyl ether), and glycidyl esters of carboxylic acids (e.g. glycidyl esters of fatty acids or versatic acids such as pivalic acid or neodecanoic acid).
Further examples include alkyl glycidyl ethers, e.g. $C_{1-16}$ alkyl glycidyl ethers, e.g. where m is from 2 to 6. Examples include glycidyl ethers of di- and polyhydric aliphatic alcohols such as hexanediol diglycidyl ether, neopentyl glycol diglycidyl ether, trimethylolpropane triglycidyl ether, glycerol triglycidylether, pentaerythritol tetraglycidyl ether, dipentaerythritol polyglycidyl ethers, butanediol diglycidyl ether, neopentylglycol diglycidyl ether, and sorbitol glycidyl ether.
Still further examples include glycidyl ethers of an aliphatic ether or polyether, e.g. dipropyleneglycol diglycidyl ether.
They can also be made by epoxidation of unsaturated fats and oils, for example unsaturated fatty acids, diglycerides or triglycerides having $C_{4-30}$ fatty acid or fatty acid ester groups. An example is Cardolite™ NC-513, which is made by reacting epichlorohydrin with an oil obtained from the shells of cashew nuts.
The reactive diluent can also be selected from epoxidized olefins, including dienes and polydienes. They can be $C_{2-30}$, $C_{8-28}$, $C_{6-18}$, $C_{14-16}$ or $C_{6-12}$ epoxidised olefins.
They can comprise from 1 to 4 epoxy groups, for example 1 or 2 epoxy groups, such as 2 epoxy groups. Specific examples include diepoxyoctane and epoxidized polybutadiene.
Epoxidised polydienes such as polybutadiene can have a molecular weight (number average, $M_n$) in the range of from 500 to 100000, for example in the range of from 1000 to 50000, or from 2000 to 20000.
Still further examples of reactive diluents include dialkyl carbonates, e.g. $C_{1-16}$ dialkyl carbonates or $C_{1-6}$ dialkyl carbonates, such as dimethyl carbonate.

In embodiments, $R^7$ is a $C_{4-8}$ alkyl group. In embodiments, the reactive diluent has from 8 to 14 carbon atoms. In embodiments, the reactive diluent is aliphatic, which can add flexibility to the coating. In embodiments, the reactive diluent is polyfunctional, i.e. m is greater than 1, e.g. from 1 to 8, or from 1 to 6, as this can help to increase drying speeds, and also increase cross-linking density. It can also help contribute to improved anticorrosive properties.

More than one reactive diluent can be used, for example combinations of any of those mentioned above.

In embodiments, the reactive diluent is present in the first part (A) of a two-component coating composition, i.e. with the curable epoxy binder.

In the coating composition as a whole, the reactive diluent can be present in an amount of from 1.0 to 15.0 wt.%, for example from 2.0 to 12.0 wt%. These amounts can help lower the viscosity of the coating composition, which is advantageous for high solids and low solvent compositions.

In embodiments, the viscosity of the reactive diluent is <50 cP, for example <30 cP, or <20 cP at 23°C and 50% RH. The viscosity can be measured using the cone and plate method described in ASTM D4287.

[Curing agent]

To allow curing of the epoxy binder, a curing agent is used. The curing agent can be selected from polyamides, polyamines, epoxy-amine adducts, phenalkamines, or phenalkamides. Curing agents can also be referred to as crosslinking agents or hardeners.

To function as a curing agent, the compound typically contains at least two "reactive" or "active" hydrogen atoms linked to nitrogen on average per molecule. Thus, the curing agent typically contains at least two amine groups. The amine groups can be primary or secondary amine groups.

Suitable curing agents include amines or amino functional polymers selected from aliphatic (including cycloaliphatic) amines and polyamines, amido amines, polyamido amines, polyoxy alkylene amines (e.g. polyoxyalkylene diamines), aminated polyalkoxy ethers (e.g. those sold commercially as "Jeffamines"), alkylene amines (e.g. alkylene diamines), aromatic amines (including aralkyl amines), Mannich bases (e.g. those sold commercially as "phenalkamines"), amino functional silicones or silanes, and any epoxy adducts and derivatives thereof.

Thiol-based curing agents can also be used, for example compounds comprising 2 or more thiol groups (often termed polythiol or polymercaptan curing agents, as described for example in US5374668). Examples include $C_{1-20}$ aliphatic or aromatic compounds comprising 2 or more (e.g. 2-4) sulfur atoms in the form of thiol groups.

Examples include those listed at column 4, line 53 to column 6, line 63 of US5374668. One specific example is thiolated norbornene.

Numerous examples of curing agents are known, for example those listed in WO2018/046702 at page 21, line 10 to page 23, line 10. Other examples include those listed at page 10, line 23 to page 12, line 5 of WO2017/068015.

Specific examples include ethylene diamine, hydroxyethyl ethylene diamine, diethylene triamine, triethylene tetramine, tetraethylene pentaamine, the reaction products with fatty acids or dimer fatty acids, to form amidoamines and amine functional polyamides (c.f. "Protective Coatings, Fundamentals of Chemistry and Composition" by Clive H. Hare, publ. Society for Protective Coatings, ISBN 0-938477-90-0). Additional examples include dicyandiamide, isophorone diamine, m-xylylene diamine, m-phenylene diamine, 1,3-bis(aminoethyl)cyclohexane, bis(4-aminocyclohexyl) methane, bis(4-amino-3-methycyclohexyl) methane, N-aminoethyl piperazine, 4,4'-diaminediphenyl methane, 4,4'-diamino-3,3'-diethyl diphenyl methane, diaminodiphenyl sulfone, and Mannich base curing agents manufactured using the above polyamine curing agents.

Adducts of any of these amines can also be used. Such adducts can be prepared by reaction of the amine with a suitably reactive compound such as a silicon-free epoxy resin or an epoxy functional reactive diluent, for example butyl glycidyl ether. Further examples of epoxy-functional reactive diluents are described in "Protective Coatings, Fundamentals of Chemistry and Composition", by Clive H. Hare, published by the Society for Protective Coatings (ISBN 0-938477-90-0). Adducts of any of these amines can also be prepared by reaction of the amine with a suitably reactive compound such as an acrylate, a maleate, a fumarate, a methacrylate, or even electrophilic vinyl compounds such as acrylonitrile.

The composition can comprise more than one curing agent, e.g. blends of two or more of any of the above curing agents.

The curing agent is preferably capable of at least partially curing the epoxy resin at a temperature in the range of -10 to 50°C, for example in the range of from 0 to 40 °C. Mixtures of amine curing agents can also be used.

Amine-containing organosilane compounds (as defined above) are not considered curing agents. If they are present in the coating composition, they are used in addition to a curing agent.

Typically, the curing agent is supplied separately from the binder before use, for example being supplied as a kit containing two parts, the binder part (A), and the curing agent part (B). The two parts are then mixed shortly before application.

In embodiments, the viscosity of the curing agent is below 300 cP, for example 100 to 300 cP.

Curing agents can optionally be used with a catalyst (or curing accelerator), for example being selected from tertiary amines and phenols. Specific examples include trimethylamine, ethyldimethylamine, propyldimethylamine, N,N'-dimethylpiperazine, pyridine, picoline, 1,8-diazabicyclo(5.4.0)undecane-1 (DBU), benzyldimethylamine, 2-(dimethylaminomethyl) phenol (DMP-10), 2,4,6-tris(dimethylaminoethyl) phenol (DMP-30), phenol novolac, o-cresol novolac, p-cresol novolac, t-butylphenol novolac, and dicyclopentadiene cresol. Further examples of catalysts include p-toluenesulfonic acid and amino-aliphatic heterocyclic salts of thiocyanic acids, e.g. the 1-aminopyrrolidone salt of thiocyanic acid (as described, for example, in US6503967.

The amount of curing agent in the total coating composition is in the range of from 10 to 35.0 wt%, for example from 10.0 to 30.0 wt.%, or for from 12.0 to 25.0 wt.%.

Active hydrogen equivalents (AHE), active hydrogen equivalent weight (AHEW), epoxy equivalents (EE) and epoxy equivalent weight (EEW) are known terms.

The epoxy equivalent weight (EEW) of an epoxy-containing compound is the weight of the compound that yields one mole (or one equivalent) of epoxy functional groups. Similarly, the active hydrogen equivalent weight (AHEW) of a compound is the weight of the curing agent required to yield one mole (or one equivalent) of active hydrogens (i.e. those present in an -NH- or $-NH_2$ group).

For any particular compound (e.g. an active hydrogen-containing compound, h, or an epoxy-containing compound, e) the AHEW and EEW can be calculated from the following equations:

$$\mathrm{AHEW_h} = \frac{\mathrm{M_h}}{\mathrm{n_h}} \qquad \mathrm{EEW_e} = \frac{\mathrm{M_e}}{\mathrm{n_e}}$$

where $M_h$ and $M_e$ are, respectively, the relative molecular weights of the active hydrogen-containing (amine) compound and the epoxy group-containing compound, and $n_h$ and $n_e$ are, respectively, the number of active hydrogens or epoxy groups in the compound.

For a given weight of compound, the number of active hydrogen equivalents (AHE) or epoxy equivalents (EE) can be calculated according to the following equations:

$$\mathrm{AHE_h} = \frac{\mathrm{m_h}}{\mathrm{AHEW_h}} \qquad \mathrm{EE_e} = \frac{\mathrm{m_e}}{\mathrm{EEW_e}}$$

where $m_h$ and $m_e$ are the masses of the active hydrogen-containing and epoxy-containing compounds respectively. The total epoxy equivalent or active hydrogen equivalent values in a mixture can then be calculated from the sum of all active hydrogen equivalent values or epoxy equivalent values of the different compounds, i.e.:

$$\mathrm{AHE_{total}} = \sum_{h=1}^{n} \mathrm{AHE_h} \qquad \mathrm{EE_{total}} = \sum_{e=1}^{n} \mathrm{EE_e}$$

where n is the number of compounds comprising active hydrogens or epoxy groups.

The AHEW and EEW can be calculated for a mixture of compounds, e.g. in a Part A or Part B component of a 2K composition, according to the following equations:

$$\mathrm{AHEW_B} = \frac{\mathrm{m_B}}{\mathrm{AHE_{total}}} \qquad \mathrm{EEW_A} = \frac{\mathrm{m_A}}{\mathrm{EE_{total}}}$$

where $m_A$ and $m_B$ are the total weights, respectively, of the Part A (epoxy-containing) and Part B (curing agent-containing) components of the composition.

Where the curing agent is an adduct with an epoxy compound, the calculation is based on the curing agent before adduct formation.

In embodiments, in the coating composition, the molar ratio of epoxy groups to active hydrogens (i.e. the $EE_{total}/AWE_{total}$) is in the range of from 0.6 to 2.0, for example from 0.8 to 1.7.

[Polyphosphate]

The polyphosphate to be used is selected from alkaline earth metal aluminium polyphosphates, including their silicates and their hydrates. The alkaline earth metal is typically selected from magnesium, calcium and strontium, for example from calcium and strontium. Examples of polyphosphates include magnesium aluminium polyphosphate, calcium aluminium polyphosphate silicate, strontium aluminium polyphosphate, and hydrates thereof. Combinations of these can be used. In embodiments, the polyphosphate is selected from calcium aluminium polyphosphate silicate hydrate and strontium aluminium polyphosphate hydrate.
The amount of polyphosphate in the coating composition is in the range of from 0.05 to 10.0 wt%, for example from 0.1 to 10.0 wt%, from 1.0 to 10.0 wt.%, of from 2.0 to 6.0 wt%.
Polyphosphates can be defined in terms of a degree of polymerisation, i.e. how many phosphate groups are included in the polyphosphate anion. In embodiments, the degree of polymerisation is in the range of from 2 to 10, for example from 2 to 7, from 3 to 10, from 3 to 7 or from 3 to 5. In embodiments, the degree of polymerisation is 3.
The polyphosphate ion can be represented by the following formula:

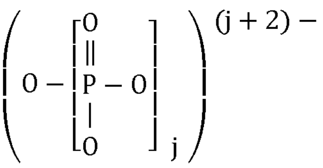

j is at least 2, for example in the range of from 2 to 10 or from 2 to 7. In embodiments, j is 3 or more, for example from 3 to 10, from 3 to 7 or from 3 to 5. In further embodiments, j is 3.
The term "(j+2)-" is the formal negative charge on the polyphosphate ion.
The negative charge is balanced by positive charges from cations, which formally have +3 and +2 charges. In embodiments, the +3 cation is aluminium, and the +2 cation(s) is (are) selected from alkaline earth ions.
The polyphosphate can be included in either part (A) or part (B) of a 2-component composition.

[Optional additives]

The coating composition may also contain other components, for example one or more auxiliary anti corrosion additives, pigments, fillers and extenders, thixotropic agents, plasticizers, inorganic and organic dehydrators (stabilizers), UV stabilizers, antifouling agents, defoamers or combinations thereof.
The total amount of such further optional components can be in the range of from 0 to 65 wt%.
These components are well-known to the skilled person, although in some cases some examples are provided below.
Fillers and extenders include those with a low oil absorption value, such as barium sulfate (including baryte), glass spheres, feldspar, calcite, silica, aluminum oxide, zirconium oxide, dolomite, kaolin or wollastonite and optionally a laminar type of extender such as mica, talc, aluminum flakes, chlorite and china clay. One or more fillers can be used. In embodiments, the amount of filler in the coating composition can be in the range of from 20.0 to 50.0 wt%.
Examples of inorganic auxiliary corrosion inhibitors (i.e. in addition to alkaline earth metal aluminium polyphosphates) include silicates (such as potassium silicate and aluminium silicate), hydrogen phosphates (such as calcium hydrogen phosphate, magnesium hydrogen phosphate, and strontium hydrogen phosphate), phosphates (such as zinc phosphate, zinc orthophosphate, zinc orthophosphate hydrate, zinc aluminium orthophosphate, and organically modified basic zinc orthophosphate), phosphosilicates (such as calcium strontium phosphosilicate and strontium zinc phosphosilicate), borophosphates (such as strontium borophosphate), molybdates, tungstates, vanadates, and metals (such as zinc dust, zinc powder, zinc alloy, magnesium, and magnesium alloy).
Examples of organic auxiliary corrosion inhibitors include azoles, such as imidazoles, thiazoles, tetrazoles, and triazoles, e.g. (substituted) benzotriazole, and 2-mercaptobenzothiazole; amines, such as N-phenyl-1.4-phenylenediamine and Schiff bases such as N,N' o-phenylen-bis(3-methoxysalicylidenimine); amino acids, such as tryptophan thiole group-containing compounds such as DMTD (2-5,dimercapto-1,3,4-thiadiazole) and 1-phenyl-2,5-dithiohydrazodicarbonamide; phthalazine derivatives, such as 2-[(7-anilino-5-[1,2,4]triazolo[3,4-b][1,3,4]thiadiazine-3-yl)methyl]phthalazine-1(2H)-one; tannins and substituted uracils; phosphonic acid group-containing materials, such as styrenephosphonic acid; succinic acid; (benzothiazol-2-ylthio) succinic acid; fatty acid derivatives such as triethanolamine-linoleic acid and tall oil fatty acid salts; and sulphonates.
More than one auxiliary corrosion inhibitor can be used. They can be present in total in the composition in an

amount ranging from 1 to 20 % solids volume.

[Preparation of the Coating Composition]

The coating composition may be prepared by any suitable technique.

In embodiments, the constituents are mechanically mixed, for example using a high-speed disperser, a ball mill, a pearl mill, a three-roll mill or an inline mixer.

The compositions may be filtered, for example using bag filters, patron filters, wire gap filters, wedge wire filters, metal edge filters, EGLM tumoclean filters (ex Cuno), DELTA strain filters (ex Cuno), and Jenag Strainer filters (ex Jenag), or by vibration filtration.

In an embodiment, the epoxy resin-containing component (part A) and the curing agent component (part B) can be mixed and stirred until homogeneous. The mixture can then be applied to a substrate, optionally after a prior induction time.

[Application of the Coating Composition]

The coating composition can be applied to a substrate (for example a steel structure) by known methods, for example by conventional air-spraying, by airless- or airmix-spraying equipment, or by 2K airless spray pumps. It can alternatively be applied using brush or roller, for example when used as a stripe coat. The composition can be applied at ambient conditions without pre-heating the coating composition. In spraying applications, conventional pressures such as 3 to 5 bars can be used.

The coating is typically applied so that a total dry film thickness of from 100-1000 μm is obtained, such as 100 to 500 μm or 150-350 μm. The applied film thickness can vary depending on the nature of substrate being coated and the environment to which it will be exposed.

[Coating Systems]

The coating composition can be used on its own, e.g. where is used as a ballast tank coating.

However, in embodiments, it can form part of a coating system comprising more than one coating composition. For example, it can be a primer, a self-priming top-coat, an intermediate coat or a top coat. It can be applied to pre-treated or non pre-treated substrates.

In embodiments, the coating composition as described above is an anticorrosive primer coating composition. It can be used in a coating system in combination with one or more top coats, which can be selected from cleartop coats and pigmented top coats. In further embodiments, the coating composition can be used as a universal primer, i.e. that prepares a surface for subsequent coating.

**Examples**

The invention will now be described with reference to the following, non-limiting examples.

[Preparation of Coatings]

Each part of a 2-part composition (Part A and Part B) was separately blended using a high-speed dispersion apparatus in the amounts specified in Table 1. Comparative examples are indicated by an asterisk (*).

The Part A and Part B compositions were then mixed together prior to being applied to a substrate. Test coatings were applied by airless spray onto pre-treated steel panels so as to obtain a dry film thickness of 160 μm. The steel surfaces were pre-treated by grit-blasting to Sa 2.5, according to ISO 8501-1, with an average surface roughness profile between 55 and 95 μm, according to ISO 8503-2. The coatings were allowed to cure at 23 ± 2 °C at 50% relative humidity (RH) for 7 days before testing.

Table 1 - Coating compositions (amounts in weight parts)

| Component | | Ex. 1* | Ex. 2 | Ex. 3 | Ex. 4* | Ex. 5* | Ex. 6* | Ex. 7* |
|---|---|---|---|---|---|---|---|---|
| Part A | Bisphenol-F epoxy [1] | 36 | 36 | 36 | 36 | 36 | 36 | 36 |
| | Filler [2] | 1 | 1 | 1 | 1 | 1 | 1 | 1 |
| | Reactive Diluent [3] | 5 | 5 | 5 | 5 | 5 | 5 | 5 |

(continued)

| Component | | Ex. 1* | Ex. 2 | Ex. 3 | Ex. 4* | Ex. 5* | Ex. 6* | Ex. 7* |
|---|---|---|---|---|---|---|---|---|
| Part A | Bisphenol-F epoxy [1] | 36 | 36 | 36 | 36 | 36 | 36 | 36 |
| | 1,6 HDDGE [4] | 5 | 5 | 5 | 5 | 5 | 5 | 5 |
| | Hydrocarbon Resin [5] | 3 | 3 | 3 | 3 | 3 | 3 | 3 |
| | Organic Silane [6] | 5 | 5 | 5 | 5 | 5 | 5 | 5 |
| | Rheological Additive [7] | 1 | 1 | 1 | 1 | 1 | 1 | 1 |
| | Pigment [8] | 6 | 6 | 6 | 6 | 6 | 6 | 6 |
| | Baryte (Filler) [9] | 28 | 25 | 25 | 25 | 25 | 25 | 25 |
| | Talc (Filler) [10] | 8 | 8 | 8 | 8 | 8 | 8 | 8 |
| | Mica (Filler) [11] | 2 | 2 | 2 | 2 | 2 | 2 | 2 |
| | Calcium aluminium polyphosphate silicate hydrate [12] | | 3 | | | | | |
| | Strontium aluminium polyphosphate hydrate [13] | | | 3 | | | | |
| | Calcium phosphate silicate [14] | | | | 3 | | | |
| | Calcium magnesium phosphate [15] | | | | | 3 | | |
| | Zinc aluminium orthophosphate hydrate [16] | | | | | | 3 | |
| | Organically modified basic zinc orthophosphate hydrate [17] | | | | | | | 3 |
| | | | | | | | | |
| Part B | Modified polyamine [18] | 22 | 22 | 22 | 22 | 22 | 22 | 22 |
| | Curing Accelerator [19] | 1 | 1 | 1 | 1 | 1 | 1 | 1 |

[1] Bisphenol-F epoxy resin (YDF-170, available from Kukdo Chemical), with an Epoxy Equivalent Weight of 170g/eq.
[2] Alkyl quaternary ammonium clay. (Garamite™ 1958, available from BYK Additives Inc)
[3] Cardolite® NC513 reactive diluent: Cashew nutshell liquid, polymer with epichlorohydrin. Epoxy Equivalent Weight is 500g/eq. (ex Cardolite ® NC513, available from Cardolite.)
[4] 1,6-hexandiol diglycidyl ether (HJ Epiol-DE 202, available from Kukdo Finechem), with an Epoxy Equivalent weight of 150g/eq.
[5] Phenol modified liquid hydrocarbon resin. (CL-50, available from Kolon Industries)
[6] Glycidoxypropyl trimethoxy silane (Dynasylan™ Glymo, available from Evonik), with an Epoxy Equivalent weight of 236 g/eq.
[7] Micronised amide modified hydrogenated castor oil (Clayvallac™ MT, available from Arkema)
[8] Titanium dioxide (CR-828, available from Tronox)
[9] Baryte (general baryte, available from Sibelco Specialty Minerals)
[10] Talc (general talc, available from Youngwoo Chemtech)
[11] Mica (Alsibronze™ 39, available from BASF)
[12] HEUCOPHOS® CAPP (available from Heubach)
[13] HEUCOPHOS® SRPP (available from Heubach)
[14] HEUCOPHOS® ACP (available from Heubach)
[15] HEUCOPHOS® CMP (available from Heubach)
[16] HEUCOPHOS® ZPA (available from Heubach)
[17] HEUCOPHOS® ZPO (available from Heubach)
[18] Ancamine™ 2738 (available from Evonik)
[19] 2,4,6-Tris(dimethylaminomethyl)phenol (Ancamine™ K54, available from Evonik)

[Coating Performance Tests]

Pull-off adhesion test: The minimum tensile stress needed to detach or rupture a coating was tested. The test was carried out in accordance with ISO 4624:2016, by first securing loading fixtures (dollies) perpendicular to the surface of a coating with an adhesive. The testing apparatus was then attached to the loading fixture and aligned to apply tension perpendicular to the test surface. The applied force (MPa) was gradually increased and monitored until either a plug of the coating detached, or a previously specified value was reached.
Pen-knife adhesion test: This test ("knife-adhesion test") was carried out in accordance with ASTM D6677. In this test, an "X" was cut in the surface of the coating, and the knife-blade was used to gently lift the cut portion of the coating from the substrate. The extent of adhesion of the coating to the substrate was determined by seeing how clean the surface was after the coating was lifted. A clear surface meant that adhesion to the steel substrate was poor. A surface still comprising portions of coating meant that adhesion to the surface was improved, the lifted material having detached through failure of coating cohesion, not through failure of coating/substrate adhesion. The extent of coating remaining on the surface was qualitatively measured on a scale of 0 to 10, with 0 indicating no residual surface coating (i.e. complete failure of adhesion) and 10 indicating no uncovered substrate surface (i.e. complete failure of coating cohesion, and no failure of coating adhesion).
Electrochemical Impedance Spectroscopy (EIS): EIS was used to evaluate the coating permeability or barrier properties based on the electrical resistance of the coating. The impedance of a coating is related to the nature of the polymer, its density, and its fillers, and indicates the ability of the coating to prevent water transgression. Lower impedance implies lower barrier properties (increased water transfer) and the onset of under-film corrosion.
The following test parameters were used to collect the EIS measurements;

- Amplitude : 0.01 V
- Frequency Range : 10000 - 1 Hz
- Current Range : 1 μA
- Measure area : 4550 $mm^2$

[Experiment 1]

Examples 1 to 3 were immersed in fresh water or seawater at 40 °C for 18 months. After the 18 month immersion period, the samples were analysed by EIS, and the results are shown in Table 2.

Table 2 - Impedance after 40 °C immersion for 18 months

| Example | Fresh water (Ω $cm^2$) | Sea water (Ω $cm^2$) |
|---|---|---|
| 1* | $2.20 \times 10^7$ | $1.17 \times 10^9$ |
| 2 | $8.05 \times 10^9$ | $2.36 \times 10^9$ |
| 3 | $2.92 \times 10^9$ | $2.33 \times 10^9$ |

The compositions were also tested for adhesion to the steel substrate by the knife-adhesion test. Results are shown in Table 3.

Table 3 - Knife adhesion tests after 40 °C immersion for 18 months

| Example | Fresh water | Sea water |
|---|---|---|
| 1* | 4 | 6 |
| 2 | 10 | 10 |
| 3 | 10 | 10 |

These results clearly show the benefits of using polyphosphate compounds compared to no phosphate compounds on both corrosion resistance and adhesion after extended periods of immersion.

[Experiment 2]

Examples 1-2 and 4-7 were immersed in fresh water or sea water at 50 °C for 3 months. After the immersion

period, EIS measurement were collected, and knife adhesion and pull-off tests were performed, with results shown in Tables 4, 5 and 6 respectively.

These tests clearly show the advantages of a polyphosphate compared to no phosphate or mono (ortho)phosphates on the wet adhesion and anti-corrosive properties of the coatings.

Table 4 - EIS measurements after 50 °C immersion for 3 months

| Example | Fresh Water ($\Omega$ cm$^2$) |
|---|---|
| 1* | $8.78 \times 10^8$ |
| 2 | $3.53 \times 10^9$ |
| 4* | $2.42 \times 10^9$ |
| 5* | $1.90 \times 10^9$ |
| 6* | $1.25 \times 10^9$ |
| 7* | $2.39 \times 10^9$ |

Table 5 - Knife adhesion tests after 50 °C immersion for 3 months

| Example | Fresh Water | Sea Water |
|---|---|---|
| 1* | 2 | 4 |
| 2 | 6 | 8 |
| 4* | 2 | 4 |
| 5* | 2 | 4 |
| 6* | 2 | 4 |
| 7* | 2 | 4 |

Table 6 - Pull-off adhesion tests after 50 °C immersion for 3 months

| Example | Fresh Water (MPa) | Sea Water (MPa) |
|---|---|---|
| 1* | 3.74 | 5.86 |
| 2 | 6.87 | 9.85 |
| 4* | 3.86 | 6.12 |
| 5* | 4.58 | 6.47 |
| 6* | 3.92 | 6.27 |
| 7* | 4.52 | 6.87 |

[Experiment 3]

Examples 1-2 and 4-7 were immersed in sea water at 40 °C for 15 months. After the immersion period, EIS measurements were collected and pull-off tests were performed, with results shown in Table 7. The inventive example performs better than the comparative examples in both tests, supporting the observations from Experiments 1 and 2.

Table 7 - EIS measurements and pull-off adhesion tests after 40 °C sea water immersion for 15 months

| Example | Sea Water ($\Omega$ cm$^2$) | Sea Water (MPa) |
|---|---|---|
| 1* | $7.35 \times 10^9$ | 5.16 |
| 2 | $1.46 \times 10^{10}$ | 8.99 |

(continued)

| Example | Sea Water ($\Omega$ cm$^2$) | Sea Water (MPa) |
|---|---|---|
| 4* | $1.14 \times 10^{10}$ | 4.24 |
| 5* | $1.24 \times 10^{10}$ | 3.92 |
| 6* | $3.79 \times 10^{9}$ | 4.43 |
| 7* | $1.01 \times 10^{10}$ | 4.00 |

[Conclusions]

The above experiments, which simulate the steel plate being exposed to a severe corrosive environment (e.g. as experienced by a ship hull or ballast tank), demonstrate that the use of polyphosphate compounds according to the invention results in improved adhesion to steel, even after long-term immersion, and that the resulting coatings have higher electrical resistance (higher EIS impedance) compared to comparative coatings that comprise no polyphosphate, or which alternatively comprise orthophosphate. This is indicative of improved long-term benefits on adhesion and corrosion resistance, particularly for portions of a vessel or structure that are immersed in water for extended periods.

## Claims

**1.** A coating composition comprising

- 10.0 to 40.0 wt% of a curable epoxy resin,
- 10.0 to 35.0 wt% of a curing agent,
- 0.05 to 10.0 wt% of one or more compounds selected from alkaline earth aluminium polyphosphates and their silicates and hydrates;

the composition having a solids content of at least 90 wt% and/or a solids volume of at least 90.0 %, when determined according to ASTM D5201.

**2.** A coating composition according to claim 1, wherein the alkaline earth metal of the alkaline earth aluminium polyphosphate is selected from calcium and strontium.

**3.** A coating composition according to claim 2, wherein the alkaline earth aluminium polyphosphate is selected from strontium aluminium polyphosphate and calcium aluminium polyphosphate silicate hydrate.

**4.** A coating composition according to any one of claims 1 to 3, wherein the curable epoxy resin comprises two aromatic or heteroaromatic groups.

**5.** A coating composition according to claim 4, in which the curable epoxy resin comprises two or more epoxy groups or epoxy ether groups.

**6.** A coating composition according to claim 4 or claim 5, in which

(a) the curable epoxy resin is selected from bisphenol A diglycidyl ether resins, bisphenol F diglycidyl ether resins, bisphenol S diglycidyl ether resins, resorcinol diglycidyl ether resins and Novolac glycidyl ether resins; and/or;
(b) the curing agent is selected from polyamides, polyamines, epoxy-amine adducts, phenalkamines, phenalkamides and polythiols.

**7.** A coating composition according to any one of claims 1 to 6, wherein the coating composition is a primer composition.

**8.** A coating composition according to any one of claims 1 to 7, wherein one or more of the following applies:

(a) the composition comprises from 1 to 15 wt% of an organic silane;

(b) the composition comprises from 1 to 15 wt% of a reactive diluent;
(c) the coating composition comprises 20 to 50w% of filler;
(d) the composition comprises from 10.0 to 25.0 wt% of curing agent;
(e) the composition comprises from 2.0 to 6.0 wt% of alkaline earth aluminium polyphosphate;
(f) the coating composition comprises 1 wt% or less of water;
(g) the curable epoxy resin has a number average molecular weight in the range of from 100 to 2000;
(h) the solvent and/or VOC content of the coating composition is less than 5 wt%;
(i) the ratio of epoxy equivalents to active hydrogens in the coating composition is in the range of from 0.6 to 2.0;

**9.** A coating composition according to claim 8, in which one or more of the following applies:

(a) the organic silane comprises an epoxy group;
(b) the reactive diluent is selected from epoxy-containing resins which are aliphatic, or which comprise no more than one aromatic or heteroaromatic group;
(c) the reactive diluent is selected from phenyl glycidyl ether, alkyl phenyl glycidyl ethers, glycidyl esters of carboxylic acids, alkyl glycidyl ethers, epoxidized unsaturated fats and oils, epoxidized olefins, epoxidized dienes and epoxidized polydienes.

**10.** A substrate coated with a dried or cured coating composition according to any one of claims 1 to 9.

**11.** A method for protecting substrate by applying to its surface a coating composition according to any one of claims 1 to 10.

**12.** A method according to claim 11, in which:

(a) the substrate is metallic; and/or
(b) the substrate is immersed below the surface of sea water or fresh water for extended periods of time, for example a ship's hull, a ship's ballast tank, or a submersed part of a mobile or fixed structure or platform.

**13.** A method according to any one of claims 11 to 12, in which the coating is applied by spraying.

**14.** A method according to any one of claims 11 to 13, in which a further, different coating composition is subsequently applied on top of the coating composition according to any one of claims 1 to 9.

**15.** A method according to any one of claims 11 to 14, in which the coating composition and/or the further different coating composition is allowed to dry or cure, optionally after applying heat.

**Patentansprüche**

**1.** Beschichtungszusammensetzung umfassend

- 10,0 bis 40.0 Gew.-% an einem härtbaren Epoxyharz,
- 10,0 bis 35,0 Gew.-% an einem Härter,
- 0,05 bis 10,0 Gew.-% an einer oder mehreren Verbindungen ausgewählt aus Erdalkalialuminiumpolyphosphaten und ihren Silicaten und Hydraten;

wobei die Zusammensetzung einen Feststoffgehalt von wenigstens 90 Gew.-% und/oder ein Feststoffvolumen von wenigstens 90,0 %, wenn bestimmt gemäß ASTM D5201, aufweist.

**2.** Beschichtungszusammensetzung gemäß Anspruch 1, wobei das Erdalkalimetall des Erdalkalialuminiumpolyphosphats ausgewählt ist aus Calcium und Strontium.

**3.** Beschichtungszusammensetzung gemäß Anspruch 2, wobei das Erdalkalialuminiumpolyphosphat ausgewählt ist aus Strontiumaluminiumpolyphosphat und Calciumaluminiumpolyphosphatsilicathydrat.

**4.** Beschichtungszusammensetzung gemäß einem der Ansprüche 1 bis 3, wobei das härtbare Epoxyharz zwei aromatische oder heteroaromatische Gruppen umfasst.

5. Beschichtungszusammensetzung gemäß Anspruch 4, wobei das härtbare Epoxyharz zwei oder mehr Epoxygruppen oder Epoxyethergruppen umfasst.

6. Beschichtungszusammensetzung gemäß Anspruch 4 oder Anspruch 5, wobei

(a) das härtbare Epoxyharz ausgewählt ist aus Bisphenol-A-diglycidyletherharzen, Bisphenol-F-diglycidyletherharzen, Bisphenol-S-diglycidyletherharzen, Resorcinoldiglycidyletherharzen und Novolakdiglycidyletherharzen; und/oder
(b) der Härter ausgewählt ist aus Polyamiden, Polyaminen, Epoxy-Amin-Addukten, Phenalkaminen, Phenalkamiden und Polythiolen.

7. Beschichtungszusammensetzung gemäß einem der Ansprüche 1 bis 6, wobei die Beschichtungszusammensetzung eine Grundierungszusammensetzung ist.

8. Beschichtungszusammensetzung gemäß einem der Ansprüche 1 bis 7, wobei eines oder mehrere von Folgendem zutrifft:

(a) die Zusammensetzung umfasst von 1 bis 15 Gew.-% an einem organischen Silan;
(b) die Zusammensetzung umfasst von 1 bis 15 Gew.-% an einem reaktiven Verdünnungsmittel;
(c) die Zusammensetzung umfasst 20 bis 50 Gew.-% Füllstoff;
(d) die Zusammensetzung umfasst von 10,0 bis 25,0 Gew.-% Härter;
(e) die Zusammensetzung umfasst von 2,0 bis 6,0 Gew.-% Erdalkalialuminiumpolyphosphat;
(f) die Beschichtungszusammensetzung umfasst 1 Gew.-% oder weniger an Wasser;
(g) das härtbare Epoxyharz weist ein anzahlgemitteltes Molekulargewicht in dem Bereich von 100 bis 2000 auf;
(h) der Lösungsmittel- und/oder VOC-Gehalt der Beschichtungszusammensetzung beträgt weniger als 5 Gew.-%;
(i) das Verhältnis von Epoxyäquivalenten zu aktiven Wasserstoffen in der Beschichtungszusammensetzung liegt in dem Bereich von 0,6 bis 2,0.

9. Beschichtungszusammensetzung gemäß Anspruch 8, wobei eines oder mehrere von Folgendem zutrifft:

(a) das organische Silan umfasst eine Epoxygruppe;
(b) das reaktive Verdünnungsmittel ist ausgewählt aus epoxyhaltigen Harzen, die aliphatisch sind oder die nicht mehr als eine aromatische oder heteroaromatische Gruppe umfassen;
(c) das reaktive Verdünnungsmittel ist ausgewählt aus Phenylglycidylether, Alkylphenylglycidylethern, Glycidylestern von Carbonsäuren, Alkylglycidylethern, epoxidierten ungesättigten Fetten und Ölen, epoxidierten Olefinen, epoxidierten Dienen und epoxidierten Polydienen.

10. Substrat, beschichtet mit einer getrockneten oder gehärteten Beschichtungszusammensetzung gemäß einem der Ansprüche 1 bis 9.

11. Verfahren zum Schützen von Substrat durch Aufbringen einer Beschichtungszusammensetzung gemäß einem der Ansprüche 1 bis 10 auf seine Oberfläche.

12. Verfahren gemäß Anspruch 11, wobei:

(a) das Substrat metallisch ist; und/oder
(b) das Substrat für ausgedehnte Zeiträume unter die Oberfläche von Meerwasser oder Süßwasser eingetaucht ist, beispielsweise ein Schiffsrumpf, ein Ballasttank eines Schiffs oder ein untergetauchter Teil einer mobilen oder feststehenden Struktur oder Plattform.

13. Verfahren gemäß einem der Ansprüche 11 bis 12, wobei die Beschichtung durch Sprühen aufgebracht wird.

14. Verfahren gemäß einem der Ansprüche 11 bis 13, wobei nachfolgend eine weitere, andere Beschichtungszusammensetzung auf die Beschichtungszusammensetzung gemäß einem der Ansprüche 1 bis 9 aufgebracht wird.

15. Verfahren gemäß einem der Ansprüche 11 bis 14, wobei die Beschichtungszusammensetzung und/oder die weitere andere Beschichtungszusammensetzung trocken oder härten gelassen wird, gegebenenfalls nach Anwenden von

Wärme.

## Revendications

**1.** Composition de revêtement comprenant

- 10,0 à 40,0 % en poids d'une résine époxy durcissable,
- 10,0 à 35,0 % en poids d'un agent de durcissement,
- 0,05 à 10,0 % en poids d'un ou plusieurs composés choisis parmi des polyphosphates d'aluminium alcalino-terreux et leurs silicates et hydrates ;

la composition ayant une teneur en solides d'au moins 90 % en poids et/ou un volume de solides d'au moins 90,0 %, lorsqu'ils sont déterminés selon la norme ASTM D5201.

**2.** Composition de revêtement selon la revendication 1, le métal alcalino-terreux du polyphosphate d'aluminium alcalino-terreux étant choisi parmi le calcium et le strontium.

**3.** Composition de revêtement selon la revendication 2, le polyphosphate d'aluminium alcalino-terreux étant choisi parmi le polyphosphate d'aluminium de strontium et l'hydrate de silicate de polyphosphate d'aluminium de calcium.

**4.** Composition de revêtement selon l'une quelconque des revendications 1 à 3, la résine époxy durcissable comprenant deux groupes aromatiques ou hétéroaromatiques.

**5.** Composition de revêtement selon la revendication 4, dans laquelle la résine époxy durcissable comprend deux groupes époxy ou groupes époxy éther ou plus.

**6.** Composition de revêtement selon la revendication 4 ou la revendication 5, dans laquelle

(a) la résine époxy durcissable est choisie parmi des résines d'éther de diglycidyle de bisphénol A, des résines d'éther de diglycidyle de bisphénol F, des résines d'éther de diglycidyle de bisphénol S, des résines d'éther de diglycidyle de résorcinol et des résines d'éther de glycidyle de novolaque ; et/ou ;
(b) l'agent de durcissement étant choisi parmi des polyamides, des polyamines, des adduits époxy-amine, des phénalcamines, des phénalcamides et des polythiols.

**7.** Composition de revêtement selon l'une quelconque des revendications 1 à 6, la composition de revêtement étant une composition d'apprêt.

**8.** Composition de revêtement selon l'une quelconque des revendications 1 à 7, l'un ou plusieurs des énoncés suivants s'appliquant :

(a) la composition comprend de 1 à 15 % en poids d'un silane organique ;
(b) la composition comprend de 1 à 15 % en poids d'un diluant réactif ;
(c) la composition de revêtement comprend 20 à 50 % en poids de charge ;
(d) la composition comprend de 10,0 à 25,0 % en poids d'agent de durcissement
(e) la composition comprend de 2,0 à 6,0 % en poids de polyphosphate d'aluminium alcalino-terreux ;
(f) la composition de revêtement comprend 1 % en poids ou moins d'eau ;
(g) la résine époxy durcissable possède un poids moléculaire moyen en nombre dans la plage allant de 100 à 2 000 ;
(h) la teneur en solvant et/ou en VOC de la composition de revêtement est inférieure à 5 % en poids ;
(i) le rapport d'équivalents d'époxy sur les hydrogènes actifs dans la composition de revêtement est dans la plage allant de 0,6 à 2,0.

**9.** Composition de revêtement selon la revendication 8, dans laquelle un ou plusieurs des énoncés suivants s'appliquent :

(a) le silane organique comprend un groupe époxy ;
(b) le diluant réactif est choisi parmi des résines contenant époxy qui sont aliphatiques, ou qui comprennent

pas plus d'un groupe aromatique ou hétéroaromatique ;
(c) le diluant réactif est choisi parmi l'éther de phényle et de glycidyle, les éthers de glycidyle et d'alkylphényle, les esters de glycidyle d'acides carboxyliques, les éthers d'alkyle et de glycidyle, les graisses et huiles insaturées époxydées, les oléfines époxydées, les diènes époxydés et les polydiènes époxydés.

**10.** Substrat revêtu par une composition de revêtement selon l'une quelconque des revendications 1 à 9 séchée ou durcie.

**11.** Procédé pour la protection d'un substrat par application sur sa surface d'une composition de revêtement selon l'une quelconque des revendications 1 à 10.

**12.** Procédé selon la revendication 11, dans lequel :

(a) le substrat est métallique ; et/ou
(b) le substrat est immergé sous la surface de l'eau de mer ou de l'eau douce pendant des périodes de temps étendues, par exemple une coque de bateau, un ballast de bateau ou une partie submergée d'une structure ou d'une plate-forme mobile ou fixe.

**13.** Procédé selon l'une quelconque des revendications 11 à 12, dans lequel le revêtement est appliqué par pulvérisation.

**14.** Procédé selon l'une quelconque des revendications 11 à 13, dans lequel une composition de revêtement différente supplémentaire est appliquée subséquemment au-dessus de la composition de revêtement selon l'une quelconque des revendications 1 à 9.

**15.** Procédé selon l'une quelconque des revendications 11 à 14, dans lequel la composition de revêtement et/ou la composition de revêtement différente supplémentaire est/sont laissée(s) à sécher ou durcir, éventuellement après l'application de chaleur.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20120025142 A
- WO 2018046702 A
- WO 2018175730 A
- US 8871888 B
- CN 106800861 A
- US 4927749 A
- WO 2017068015 A
- US 5374668 A
- US 6503967 B


### Non-patent literature cited in the description


- **CLIVE H. HARE.** Protective Coatings, Fundamentals of Chemistry and Composition. Society for Protective Coatings